# EUROPÄISCHE PATENTSCHRIFT

(11) **EP 1 227 005 B1**
(45) Veröffentlichungstag und Bekanntmachung des Hinweises auf die Patenterteilung: **19.04.2006**
(21) Anmeldenummer: 01130332.8
(22) Anmeldetag: 19.12.2001
(51) Int. Cl.: B60R 13/10

(54) **Kennzeichnungsträger**
Identification carrier
Support d'immatriculation

(30) Priorität: 26.01.2001 DE 10103613
(43) Veröffentlichungstag der Anmeldung: 31.07.2002
(73) Patentinhaber: Stempel-Herbst GmbH, 81829 München (DE)
(72) Erfinder: Binder, Alfons, 81827 München (DE)
(74) Vertreter: Fischer, Matthias

(56) Entgegenhaltungen:
- EP-A- 0 102 904
- US-A- 5 819 449

## Beschreibung

Die vorliegende Erfindung betrifft einen Kennzeichnungsträger, insbesondere für Kraftfahrzeuge und ein Verfahren zur Herstellung desselben.

Es sind beispielsweise TÜV-Plaketten für Kraftfahrzeuge bekannt, die mit einer Art Zifferblatt bedruckt sind und im bedruckten Bereich erhaben ausgebildet sind. Diese erhabene, aus der Kennzeichnungsträgerfläche heraustretende Struktur wird dadurch erreicht, daß man das Material mit entsprechend der gewünschten Kontur profilierten Prägestempeln - von der Betrachterseite der Plakette von hinten - prägt, wobei eine Erhebung auf der Vorderseite einer Vertiefung auf der Rückseite entspricht. Die in der Regel aus Kunststofffolie hergestellten Plaketten können nun im Einsatz unter Einfluß von Druck und/oder erhöhter Temperatur wieder zurückverformt werden, so daß die Prägung wieder verschwindet. Dadurch ist die Echtheit einer derartigen Plakette bzw. deren Unversehrtheit nicht nachprüfbar bzw. gewährleistet. Der ansonsten gegebene Vorteil, daß man auch bei schlechter Sicht allein durch Tastprüfung die Echtheit einer Marke überprüfen kann, ist dann nicht mehr möglich. Die Plakette muß gegebenenfalls in einem umständlichen und kostenverursachenden Verfahren ausgetauscht bzw. erneuert werden.

US 5819449 beschreibt einen Kennzeichnungsträger mit einer geprägte Trägerschicht und einer Schutzschicht.

Die Aufgabe der Erfindung besteht darin, einen Kennzeichnungsträger der eingangs genannten Art zu schaffen und auch ein Verfahren zur Herstellung desselben vorzuschlagen, wobei die aus dem Stand der Technik bekannten Nachteile vermieden oder zumindest stark vermindert werden.

Die Aufgabe wird gelöst mit einem Kennzeichnungsträger gemäß Anspruch 1. Ein derartig aufgebauter Kennzeichnungsträger enthält zwischen einer geprägten Trägerschicht und einer Schutzschicht eine wenigstens bereichsweise vorliegende Quellmaterialschicht, wobei das Quellmaterial im Herstellungsprozeß bei geeigneter Beeinflussung des Kennzeichnungsträgers, beispielsweise durch Temperatur, aufquillt und hierbei darüberliegende Schichten, nämlich z. B. die beim Prägevorgang mitgeprägte Schutzschicht, von der Trägerschicht weg- bzw. zurückdrückt und hierbei den entstehenden Raum zwischen der in der Trägerschicht vorliegenden Vertiefung und der zurückgedrückten Schutzschicht auffüllt. Zweckmäßigerweise wird hier ein Quellmaterial gewählt, das einmal unter bestimmten Bedingungen quillt und dann aushärtet, d.h. eine weitere Beeinflussung durch Druck oder Temperatur verändert die Gestalt und Struktur des Quellmaterials nicht mehr. Der Vorteil dieser Konfiguration besteht darin, daß, die dem Betrachter erhaben erscheinende Prägung des Kennzeichnungsträgers unabhängig von äußeren, insbesondere thermischen Einflüssen erhalten bleibt. Damit behält der Kennzeichnungsträger als solcher im Einsatz im wesentlichen seinen ursprünglichen Zustand und ist diesbezüglich fälschungssicherer.

In einer vorteilhaften Weiterbildung der Erfindung ist die Quellmaterialschicht transparent. Sie beeinflußt also in keiner Weise die sonstig gewünschte Farbgebung des Kennzeichnungsträgers.

In einer weiteren vorteilhaften Ausbildung des erfindungsgemäßen Kennzeichnungsträgers ist die Trägerschicht bedruckt. Hierbei kann man je nach Wunsch die geprägten Bereiche oder die nicht geprägten Bereiche oder Mischungen hiervon durch Farbgebung hervorheben und sogar den Effekt erreichen, als bestünde die gesamte Erhebung aus Druckfarbe, während sie tatsächlich nur oberflächlich aus Druckfarbe besteht. In einer anderen vorteilhaften Ausbildung der Erfindung kann man einen ähnlichen Effekt erreichen, nämlich wenn die Quellmaterialschicht eine Quellfarbenschicht ist. Das Quellmaterial selbst besteht aus einer Quellfarbe, die, da sie vom Betrachter aus gesehen hinter der Trägerschicht aufgebracht ist, von außen ohne Zerstörung des Kennzeichnungsträgers nicht manipulierbar ist.

Die Aufgabe wird auch gelöst durch ein Verfahren nach Anspruch 5. Danach wird hintereinander auf eine Trägerschicht eine Quellmaterialschicht und eine Schutzschicht aufgebracht. Dann wird der Schichtverband entsprechend den gewünschten Konturen, insbesondere im Bereich des aufgebrachten Quellmaterials geprägt und danach eine bestimmte Zeit auf eine bestimmte Temperatur erwärmt, so daß das Quellmaterial aufquellen und hierbei aushärten kann. Bei dem Aufquellvorgang wird die gegenüber der Trägerschicht liegende Schutzschicht von der Trägerschicht weggedrückt. Der sich hierbei ergebende Hohlraum wird von der im gequollenen Zustand aushärtenden und erstarrenden Quellfarbe irreversibel ausgefüllt.

In einer vorteilhaften Ausbildung des erfindungsgemäßen Verfahrens ist wird vor dem Aufbringen einer Schutzschicht eine Kleberschicht aufgebracht, die sich beim Erwärmen ähnlich wie die Schutzschicht verhält.

Vorteilhafte Zeit- und Temperaturbereiche für den Erwärmungsvorgang des Schichtverbandes gemäß den Ansprüchen 6 und 7 sind in den Ansprüchen 8 bis 10 formuliert. Die hierbei gefundenen Zeit- und Temperaturbereiche wurden im Versuch als äußerst zweckmäßig ermittelt.

Weitere Vorteile der Erfindung ergeben sich aus den Unteransprüchen.

Um die Erfindung näher zu erläutern, wird sie anhand einer Zeichnung kurz beschrieben.
- Figur 1: zeigt schematisch einen sehr stark vergrößerten Ausschnitt einer Schichtfolge eines erfindungsgemäßen Kennzeichnungsträgers nach dem Aufeinanderlegen der Schichten.
- Figur 2: zeigt die Schichtfolge von Figur 1 beim Einbringen eines Prägestempels.
- Figur 3: zeigt den erfindungsgemäßen Kennzeichnungsträger nach dem vollendeten Quell- bzw. Aushärtvorgang.

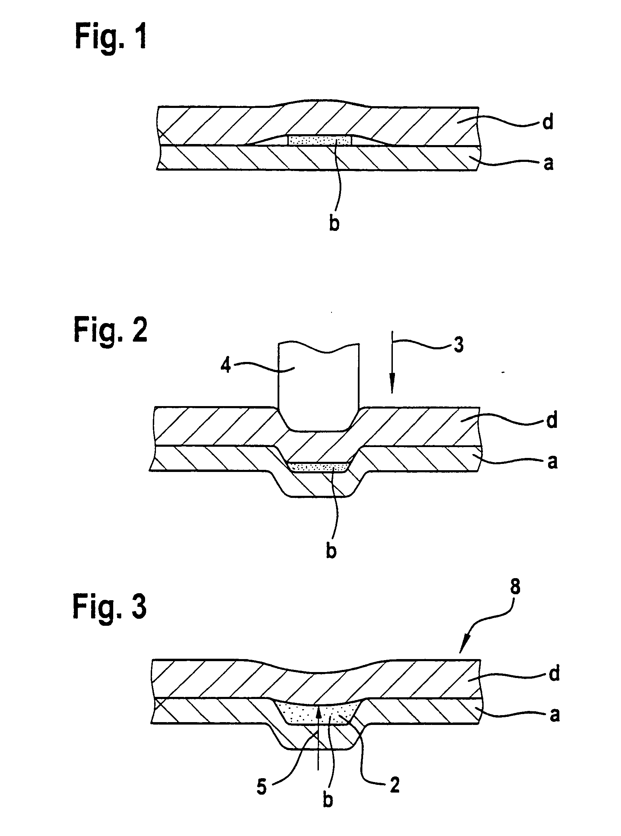

Figur 1 zeigt eine Schichtenfolge 1 der Schichten eines erfindungsgemäßen Kennzeichnungsträgers, nämlich eine Trägerschicht a, eine Quellmaterialschicht b und darüber eine Schutzschicht d. Es wird betont, daß die hier gewählte Beschreibung nur die zur Erläuterung der vorliegenden Erfindung absolut notwendigen Teile eines Kennzeichnungsträgers berücksichtigt. Selbstverständlich könnten hier weitere Schichten in zweckmäßigen Lagen ebenfalls zusätzlich eingebaut sein.

Figur 2 zeigt die Schichtenfolge nach Figur 1 nach dem Eindringen eines Prägestempels 4, der in Richtung eines Pfeils 3 in die Schichtenfolge eingedrückt wurde. Eine dem Prägestempel 4 beim Prägen gegenüber angeordnete Matrize wurde in dieser Darstellung weggelassen. Man erkennt in der Ausbildung der Schichtenfolge nach Figur 2, wie die einzelnen Schichten aufgrund der Bewegung des Prägestempels 4, der hier nur abgebrochen schematisch dargestellt ist, ausgewichen sind. In allen drei hier gewählten Darstellungen (Figuren 1 bis 3) zeigt die beim erfindungsgemäßen Kennzeichnungsträger zum Betrachter weisende Seite zur Bildunterkante. Das heißt, daß der Prägestempel 4, vom Betrachter aus gesehen, eine Erhebung geschaffen hat.

Figur 3 zeigt die erfindungsgemäße Schichtfolge 1 des erfindungsgemäßen Kennzeichnungsträgers 8 nach einem weiteren Verfahrensschritt 'Erwärmen der Schichten', wobei die Quellmaterialschicht b, deren Eigenschaft es ist, sich unter Wärme auszudehnen, die Schicht d in Richtung eines Pfeils 5 zurückdrängt.

Als Quellmaterial wird z. B. eine im Handel unter dem Namen Expantex EX erhältliche Siebdruckfarbe einer Firma Sericol Limited Westwood Road Broadstairs, Kent, England eingesetzt. Hierbei werden die Kennzeichnungsträger beispielsweise in einem Konvektionsofen bei 120 bis 140 °C ein bis drei Minuten oder in einem Lang-/Mittelwelleninfrarotofen bei 100 bis 120 °C fünfzehn bis sechzig Sekunden lang erwärmt. Dabei härtet die Quellfarbe irreversibel aus und behält ihre Form danach bei. Darauffolgende Erwärmungen oder Abkühlungen haben auch keinen Einfluß mehr auf die Form der bereits erstarrten und ausgehärteten Quellfarbe.

Selbstverständlich ist der erfindungsgemäße Gegenstand sowie das Verfahren zur Herstellung desselben oben nur soweit wie nötig beschrieben. Die Variationsbreite zur Anwendung der verschiedenen Materialien ist nicht auf das vorliegende Beispiel beschränkt. So kann z. B. als Quellmaterial eine Reihe von Farben von schwarz über weiß, gelb, orange, rot, violett, blau, grün, magenta zum Einsatz kommen. Hierbei soll jedoch beachtet werden, daß nach dem erfindungsgemäßen Verfahren auch farblose oder einfarbige Kennzeichnungsträger hergestellt werden können, die über eine reine Abtastung geprüft bzw. abgelesen werden können. Der Konfiguration bzw. Ausbildung der durch die Prägung geschaffenen Information auf dem Kennzeichnungsträger sind praktisch keine Grenzen gesetzt.

## Patentansprüche

1. Kennzeichnungsträger, insbesondere für Kraftfahrzeuge, mit folgenden Schichten:
a) eine geprägte Trägerschicht (a),
b) eine wenigstens bereichsweise vorliegende Quellmaterialschicht (b) und
d) eine Schutzschicht (d).

2. Kennzeichnungsträger nach Anspruch 1, **dadurch gekennzeichnet, daß** er zwischen Quellmaterialschicht (b) und Schutzschicht (d) eine Kleberschicht (c) aufweist.

3. Kennzeichnungsträger nach Anspruch 1 oder 2, **dadurch gekennzeichnet, daß** die Quellmaterialschicht (b) transparent ist.

4. Kennzeichnungsträger nach Anspruch 1, 2 oder 3, **dadurch gekennzeichnet, daß** die Trägerschicht (a) bedruckt ist.

5. Kennzeichnungsträger nach Anspruch 1, 2, 3 oder 4, **dadurch gekennzeichnet, daß** die Quellmaterialschicht eine Quellfarbenschicht (b) ist.

6. Verfahren zur Herstellung eines Kennzeichnungsträgers nach einem der vorhergehenden Ansprüche, **dadurch gekennzeichnet, daß** es folgende Schritte aufweist:
a) Aufbringen einer Quellmaterialschicht (b) auf eine Trägerschicht (a),
c) Aufbringen einer Schutzschicht (d),
d) Prägen der Schichten,
e) Erwärmen der Schichten.

7. Verfahren nach Anspruch 6, **dadurch gekennzeichnet, daß** vor dem Aufbringen einer Schutzschicht (d) eine Kleberschicht (c) aufgebracht wird.

8. Verfahren nach Anspruch 6 oder 7, **dadurch gekennzeichnet, daß** die Schichten für eine Zeitdauer zwischen 15 und 180 Sekunden auf eine Temperatur zwischen 100 und 140 °C erwärmt werden.

9. Verfahren nach Anspruch 6 oder 7, **dadurch gekennzeichnet, daß** die Schichten für eine Zeitdauer zwischen 15 und 60 Sekunden auf eine Temperatur zwischen 110 und 120 °C erwärmt werden.

10. Verfahren nach Anspruch 6 oder 7, **dadurch gekennzeichnet, daß** die Schichten für eine Zeitdauer zwischen 60 und 180 Sekunden auf eine Temperatur zwischen 120 und 140 °C erwärmt werden.

11. Verfahren nach einem der Ansprüche 6 bis 10, **dadurch gekennzeichnet, daß** die Trägerschicht bedruckt wird.

## Claims

1. An identification substrate, particularly for motor vehicles, comprising the following layers:
a) an embossed backing layer (a),
b) a bloating material layer (b) applied at least partly, and
d) a cover layer (d).

2. The identification substrate as set forth in claim 1, **characterized in that** it comprising between said bloating material layer (b) and said cover layer (d) an adhesive layer (c).

3. The identification substrate as set forth in claim 1 or 2, **characterized in that** said bloating material layer (b) is transparent.

4. The identification substrate as set forth in claim 1, 2 or 3, **characterized in that** said backing layer (a) is imprinted.

5. The identification substrate as set forth in claim 1, 2, 3 or 4, **characterized in that** said bloating material layer is a colored bloating material layer (b).

6. A method of producing an identification substrate as set forth in any of the preceding claims, comprising the following steps:
a) applying a bloating material layer (b) to a backing layer (a),
c) applying a cover layer (d),
d) embossing said layers,
e) heating said layers.

7. The method as set forth in claim 6, **characterized in that** an adhesive layer (c) is applied before applying a cover layer (d).

8. The method as set forth in claim 6 or 7, **characterized in that** said layers are heated for a duration of 15 to 180 seconds to a temperature in the range 100 to 140°C.

9. The method as set forth in claim 6 or 7, **characterized in that** said layers are heated for a duration of 15 to 60 seconds to a temperature in the range 110 to 120°C.

10. The method as set forth in claim 6 or 7, **characterized in that** said layers are heated for a duration of 60 to 180 seconds to a temperature in the range 120 to 140°C.

11. The method as set forth in any of the claims 6 to 10, **characterized in that** said substrate is imprinted.

## Revendications

1. Support d'immatriculation, notamment pour véhicules automobiles comportant les couches suivantes :
a) une couche support emboutie (a),
b) une couche de matière gonflante (b) présente au moins par zones et
d) une couche de protection (d).

2. Support d'immatriculation selon la revendication 1, **caractérisé en ce qu'**il présente une couche de colle (c) entre la couche de matière gonflante (b) et la couche de protection (d).

3. Support d'immatriculation selon la revendication 1 ou 2, **caractérisé en ce que** la couche de matière gonflante (b) est transparente.

4. Support d'immatriculation selon les revendications 1, 2 ou 3, **caractérisé en ce que** la couche support (a) est imprimée.

5. Support d'immatriculation selon les revendications 1, 2, 3 ou 4, **caractérisé en ce que** la couche de matière gonflante est une couche de couleur gonflante (b).

6. Procédé pour la fabrication d'un support d'immatriculation d'après l'une des revendications précédentes, **caractérisé en ce qu'**il présente les étapes suivantes :
a) application d'une couche de matière gonflante (b) sur une couche support (a),
c) application d'une couche de protection (d),
d) emboutissage des couches,
e) réchauffement des couches.

7. Procédé selon la revendication 6, **caractérisé en ce qu'**avant l'application d'une couche de protection (d) une couche de colle (c) est appliquée.

8. Procédé selon la revendication 6 ou 7, **caractérisé en ce que** les couches sont réchauffées entre 15 et 180 secondes à une température entre 100 et 140°C.

9. Procédé selon la revendication 6 ou 7, **caractérisé en ce que** les couches sont réchauffées pour une durée de 15 à 60 secondes à une température entre 110 et 120°C.

10. Procédé selon la revendication 6 ou 7, **caractérisé en ce que** les couches sont réchauffées entre 60 et 180 secondes à une température entre 120 et 140°C.

11. Procédé selon l'une quelconque des revendications 6 à 10, **caractérisé en ce que** la couche support est imprimée.
